# FASCICULE DE BREVET EUROPEEN

(11) **EP 1 493 370 B1**
(45) Date de publication et mention de la délivrance du brevet: **15.02.2006**
(21) Numéro de dépôt: 04356113.3
(22) Date de dépôt: 25.06.2004
(51) Int. Cl.: A47J 42/56, A47J 43/046

(54) **Appareil électroménager pour la préparation des aliments comportant une poignée perfectionnée**
Haushaltsgerät zum Bereiten von Nahrungsmitteln mit einem verbesserten Griff
Electrical household appliance for preparing food with an improved handle

(30) Priorité: 02.07.2003 FR 0307998
(43) Date de publication de la demande: 05.01.2005
(73) Titulaire: SEB S.A., 69130 Ecully (FR)
(72) Inventeur: Beaudet, Jean Yves, 61410 Haleine (FR)
(74) Mandataire: Kiehl, Hubert

(56) Documents cités:
- GB-A- 2 082 713
- US-A- 5 037 033

## Description

La présente invention est relative à un appareil électroménager pour la préparation des aliments du type notamment robot de cuisine multifonction ou blender (on comprend un appareil utilisé pour réaliser des préparations liquides par mixage) et concerne plus particulièrement un ensemble formant poignée pour un récipient de travail d'un tel appareil.

Un appareil de préparation ou de traitement des aliments comporte généralement un boîtier renfermant un groupe moteur électrique et présentant un socle dont la face supérieure est traversée par l'arbre de sortie du groupe moteur et un récipient de travail ou bol verrouillé de manière amovible sur le socle du boîtier, ledit récipient étant fermé par verrouillage par un couvercle amovible et logeant en sa partie inférieure un outil de travail entraîné en rotation par l'arbre du groupe moteur. Le document FR 2 765 467 au nom de la demanderesse décrit un tel appareil comportant un dispositif de sécurité comprenant un poussoir vertical monté coulissant dans la paroi périphérique du bol et actionné par une came portée par le couvercle de manière à pénétrer dans une ouverture pratiquée dans le socle pour venir actionner un interrupteur de commande du moteur. Fonctionnant à satisfaction, on s'est rendu compte que, lors du nettoyage du bol, de l'eau ou des saletés pénétraient dans la paroi périphérique du bol et étaient susceptibles d'endommager le bon fonctionnement du dispositif de sécurité.

Le document FR 2 608 409 décrit un groupe accessoire monté amovible entre le socle et le bol de travail d'un appareil de cuisine. Ce groupe accessoire comprend un boîtier intermédiaire monté amovible au bol de travail, boîtier intermédiaire dans lequel est monté un dispositif de sécurité actionné par le couvercle du bol et un dispositif d'accouplement de l'outil de travail. Un prolongement transversal du boîtier intermédiaire forme poignée et comprend une partie du dispositif de sécurité qui coopère avec une partie du dispositif de sécurité du couvercle. Cette solution présente, certes, l'avantage de rendre démontables les parties en contact avec les aliments lors du fonctionnement et de faciliter ainsi leur nettoyage. Par contre, une telle solution constructive de groupe accessoire pour appareil de cuisine faisant appel à un dispositif d'accouplement intermédiaire relié au dispositif de sécurité s'avère complexe et coûteuse. De surcroît, une telle poignée de groupe accessoire s'avère extrêmement encombrante et présente un poids important, ce qui rend difficile la manipulation de l'ensemble poignée et bol de travail, ce dernier contenant déjà une préparation alimentaire.

On connaît par ailleurs le document US 5 037 033 qui décrit un robot de cuisine comportant un socle abritant un moteur qui peut être mis en marche uniquement lorsqu'un dispositif de sécurité est mis en place pour actionner l'interrupteur du moteur. Le bol de travail comporte à ces fins une poignée fixe traversée par un conduit vertical qui abrite une tige de sécurité mobile axialement alignée, en sa partie inférieure, avec l'interrupteur du moteur. Cette tige de sécurité est également alignée, en sa partie supérieure, avec le dispositif de sécurité du couvercle de bol, notamment avec une tige verticale supérieure mobile axialement en étant actionnée par l'extrémité d'un couvercle de goulotte. La tige verticale supérieure fait partie d'un ensemble monté amovible, dans un but de nettoyage, sur la paroi de la goulotte du couvercle de bol. Cette solution a été envisagée, certes, dans le but de permettre le nettoyage du couvercle et du dispositif de sécurité du couvercle, mais nullement comme moyen de préhension du couvercle et encore moins du bol. De surcroît, une telle solution ne résout pas le problème du nettoyage du bol dont la poignée fixe, non démontable, renferme une tige de sécurité et son ressort qui sont susceptibles d'être contaminés par les aliments ou les produits résultant du nettoyage du bol.

Le but de la présente invention est de remédier au moins en partie aux inconvénients précités et de proposer un appareil électroménager pour la préparation des aliments permettant une facilité de nettoyage du bol et de sa poignée.

Un autre but de l'invention est un appareil électroménager pour la préparation des aliments présentant un encombrement réduit et ayant des possibilités de rangement de ses composants.

Un autre but de l'invention est un appareil électroménager pour la préparation des aliments de conception optimisée permettant un plus grand choix des matériaux et des technologies de fabrication.

Un autre but de l'invention est un appareil électroménager pour la préparation des aliments qui soit d'une grande fiabilité, d'une mise en oeuvre simplifiée tout en optimisant les coûts de fabrication.

Ces buts sont atteints avec un appareil électroménager pour la préparation des aliments comportant un boîtier renfermant un groupe moteur électrique et présentant une région formant socle dont la face supérieure est traversée par l'arbre de sortie du groupe moteur ; un bol verrouillé de manière amovible sur le socle du boîtier, ledit bol étant fermé par verrouillage par un couvercle amovible et logeant un outil de travail destiné à être entraîné en rotation par l'arbre du groupe moteur ; un dispositif de sécurité comprenant un interrupteur agencé dans le circuit d'alimentation du moteur ; ainsi qu'une tige de sécurité venant en prise avec ledit couvercle et susceptible d'actionner ledit interrupteur du moteur lors du verrouillage du bol avec le couvercle, le bol présentant une poignée de préhension, du fait que la tige de sécurité est supportée par ladite poignée montée amovible sur la paroi latérale du bol.

Par groupe moteur on entend non seulement le bloc moteur, mais également les organes de transmission tels que : roue dentée, pignon, courroie crantée, etc. permettant de déporter l'arbre de sortie de puissance à l'outil de travail en un endroit adéquat de l'appareil.

Par tige de sécurité venant en prise avec le couvercle et susceptible d'actionner l'interrupteur du moteur, on comprend une tige de sécurité qui, d'une part, est apte à détecter la présence du couvercle mis en place sur le bol et, d'autre part, est amenée à actionner, soit directement, soit par l'interposition d'une ou plusieurs pièces intermédiaires (par exemple leviers pivotants, tiges coulissantes, couronnes rotatives, etc.) l'interrupteur du moteur ou un organe de commande de ce dernier autorisant la mise en marche du moteur.

Selon l'invention, la poignée forme, avec la tige de sécurité, un ensemble qui est monté amovible (on comprend facilement démontable à la main, sans utiliser d'outil de démontage) sur la paroi latérale du bol de travail (on comprend à l'extérieur du bol). Ceci permet de rendre nettement plus facile le nettoyage des parties en contact avec les aliments, plus particulièrement du bol de travail, lorsque l'ensemble poignée et tige de sécurité est désolidarisé du bol. La poignée peut également être nettoyée ou essuyée plus facilement, car sa manipulation s'en trouve facilitée.

Par ailleurs, une telle poignée amovible autorise un rangement amélioré du bol qui occupe un volume moins important en étant exempt de sa poignée et peut ainsi être rangé facilement à l'intérieur d'un placard, d'un boîtier de rangement, etc. L'ensemble poignée et tige de sécurité pourrait également être logé à l'intérieur du bol, ce qui améliorerait davantage les propriétés de rangement de l'appareil.

Une telle solution présente de nombreux avantages en terme de facilité de conception du bol et de la poignée, car l'ensemble bol et poignée de l'état de la technique peut maintenant être décomposé en plusieurs composants de formes simplifiées et de construction plus robuste. Ainsi, une poignée démontable peut être avantageusement réalisée en un matériau différent de celui du bol, voire même en bi-matière, tout en gardant de bonnes propriétés de tenue mécanique. De nouvelles technologies de réalisation d'une telle poignée peuvent être envisagées, par exemple l'injection à gaz, la bi-injection, conférant des propriétés mécaniques, de toucher ou d'aspect esthétique améliorées. Par ailleurs, la construction du bol de réception d'une telle poignée amovible s'en trouve grandement simplifiée. Ainsi, le bol de travail, généralement de forme cylindrique, ou présentant une certaine conicité, peut être obtenu en une matière plastique par une technique d'injection, voire même dans d'autres matières, tel le verre, le métal, etc. , pour une mise en oeuvre facilitée.

De préférence, la poignée présente un corps de poignée muni, sur ses bordures verticales, de moyens de fixation à la paroi latérale du bol et comportant, à l'intérieur du corps de poignée, des moyens de support pour la tige de sécurité.

Ceci permet de fixer la poignée par sa périphérie à la paroi du bol de travail, tout en laissant sa zone interne disponible pour la tige de sécurité, notamment permettant le mouvement de cette dernière par rapport à la poignée.

Avantageusement, lesdits moyens de fixation comportent, sur la poignée, au moins une paire de tenons d'engagement sur au moins une portion de glissière située sur la paroi latérale du bol ou, inversement, les tenons appartenant au bol et la glissière à la poignée.

Ce type de fixation amovible permet un montage et un démontage rapide de la poignée, tout en assurant une bonne orientation de l'ensemble poignée et tige de sécurité par rapport au bol de travail. En effet, la tige de sécurité doit être positionnée d'une manière précise par rapport au bol afin de pouvoir transmettre correctement le mouvement de présence du couvercle en direction de l'interrupteur du moteur, le positionnement correct de la tige devant être assuré, de manière répétitive, lors de chaque mise en place de la poignée. Le montage par glissière verticale, qui est donc parallèle à la bordure verticale de la poignée, permet une orientation selon un axe vertical, avec un seul degré de liberté possible : la translation verticale.

Utilement, ladite glissière comporte une partie d'extrémité formant butée pour les tenons de ladite poignée.

Une telle partie d'extrémité forme butée pour les tenons de la poignée lors du déplacement vertical vers le haut de la poignée sur la paroi latérale du bol. Elle assure également la préhension du bol de travail par la poignée, la surface de contact des tenons de poignée avec la butée de glissière assurant ainsi la surface portante de l'ensemble.

De préférence, lorsque lesdits tenons sont situés sur la poignée, ils le sont sur la bordure interne du corps de poignée.

On aurait pu prévoir, certes, des tenons situés sur la bordure externe du corps de poignée, mais on préfère l'agencement de ces tenons sur la bordure interne du corps de poignée, car cette construction est plus compacte et permet de protéger, à l'intérieur du corps de poignée, les moyens de fixation de la poignée sur le bol de travail.

Avantageusement, l'appareil de l'invention comporte des moyens de verrouillage de la poignée en position sur la paroi latérale du bol.

Ceci assure une fixation stable de la poignée par rapport au bol lorsqu'elle est en position sur la paroi latérale du bol, c'est à dire lorsque les tenons de la poignée arrivent en fin de course de coulissement sur la glissière du bol. Le verrouillage de la poignée par rapport au bol assure la sécurité de montage de l'ensemble bol avec poignée qui peut ainsi être manipulé facilement et dans tous les sens, sans qu'un démontage intempestif puisse intervenir.

De préférence, lesdits moyens de verrouillage comportent une tige transversale montée à l'intérieur du corps de poignée en étant munie d'un crochet de fixation à la paroi latérale du bol.

Par tige transversale on comprend une tige disposée perpendiculairement à l'axe longitudinal de la poignée qui est, lui, parallèle à la paroi latérale du bol de travail. Cette tige comporte donc un crochet permettant d'immobiliser la poignée par rapport au bol, voire de limiter son déplacement vertical entre le point de contact des tenons avec ladite butée de glissière et la position du crochet.

Avantageusement, ladite tige transversale est montée à coulissement horizontal à l'intérieur du corps de poignée et elle se prolonge par un bouton poussoir extérieur.

Une telle tige à coulissement comportant un bouton extérieur au corps de la poignée permet un actionnement depuis l'extérieur pour obtenir un mouvement de coulissement en direction horizontale à l'intérieur de la poignée assurant le verrouillage et le déverrouillage de la poignée par rapport au bol de travail.

Utilement, ladite tige transversale est montée à l'encontre d'un ressort à l'intérieur du corps de poignée.

Ceci permet le retour automatique vers la position d'équilibre, sous la poussée du ressort, après l'effort exercé par l'utilisateur sur le bouton poussoir à l'encontre de la force du ressort. Notamment, la position d'équilibre dite de repos est une position de verrouillage assurant une manipulation sans souci du bol muni de la poignée.

Avantageusement, ledit crochet présente une section transversale en dent de scie où la surface inclinée coopère avec la surface correspondante d'une patte située sur la paroi latérale du bol et la partie horizontale sert de butée en fin de course.

Une telle section en dent de scie présente tout d'abord une surface inclinée par rapport à la verticale, et donc à la direction de coulissement du corps de poignée lors de sa mise en place par rapport au bol, surface inclinée qui permet de transformer le mouvement de coulissement vertical du corps de poignée en un mouvement de translation horizontale de la tige transversale. L'inclinaison est réalisée de manière à provoquer un déplacement dans le sens contraire à la poussée exercée par le ressort sur la tige transversale, par exemple une inclinaison vers l'intérieur du corps de poignée lors d'un coulissement vertical vers le haut du corps de poignée, la poussée du ressort étant exercée vers l'extérieur du corps de poignée. La partie plane horizontale sert de butée inférieure en fin de course de coulissement du corps de poignée par rapport au bol, cette partie horizontale du crochet prenant alors appui sur la surface horizontale d'une patte de fixation appartenant à la paroi latérale du bol de travail.

Utilement, ladite tige transversale forme support pour la tige de sécurité.

La tige transversale a donc le rôle de rendre solidaires la poignée et la tige de sécurité, ainsi que de guider ladite tige de sécurité lors de son mouvement par rapport à la poignée. Ceci permet de réduire le nombre des pièces qui forment l'ensemble poignée et d'en simplifier le montage.

Selon un premier mode de réalisation de l'invention, ladite tige de sécurité est montée pivotante autour d'un axe transversal à l'intérieur de la poignée.

Une telle tige de sécurité pivotante autour d'un axe transversal ou horizontal (parallèle donc au socle de l'appareil supportant le bol de travail) peut venir en prise en sa partie supérieure avec le couvercle d'un bol de robot multifonction et transmettre en sa partie inférieure le mouvement à l'interrupteur du moteur où à une pièce intermédiaire de transmission.

Selon un deuxième mode de réalisation de l'invention, ladite tige de sécurité est montée à coulissement axial à l'intérieur de la poignée.

Une telle tige de sécurité coulissante en direction axiale ou verticale convient plus particulièrement à l'utilisation dans le cadre du dispositif de sécurité d'un bol blender (ou mélangeur) de forme allongée, positionné avec sa base sur le socle de l'appareil. L'extrémité supérieure de la tige peut alors être poussée vers la bas par le couvercle du bol lors de sa mise en place, alors que son extrémité inférieure transmet le mouvement à l'interrupteur du moteur ou à une pièce intermédiaire de transmission.

Avantageusement, ladite poignée comporte un corps de poignée en forme de V renversé (en regardant le bol de face, la poignée étant positionnée sur le côté), dont une branche sert de fixation à la paroi latérale du bol et porte ledit bouton poussoir et l'autre branche forme extrémité libre de ladite poignée, où ledit bouton poussoir est agencé proche au-dessus de l'extrémité libre de la poignée.

Ceci assure une préhension ergonomique de la poignée car, lors de sa prise en main par l'extrémité libre, un actionnement du bouton poussoir par le pouce de la même main devient alors possible.

L'invention sera mieux comprise à l'étude des modes de réalisation pris à titre nullement limitatif et illustrés dans les figures annexées dans lesquelles :
- la figure 1 est une vue frontale d'un appareil de l'invention;
- la figure 2 est une vue éclatée en perspective d'un bol de travail avec son couvercle et d'une poignée selon un premier mode de réalisation de l'invention;
- la figure 3 est une vue en coupe axiale d'un bol de travail comportant un couvercle verrouillé sur le bol et une poignée selon la figure 2 en position sur le bol;
- la figure 4 est une vue en coupe longitudinale de la poignée de la figure 3 en position sur le bol;
- la figure 5 est une vue à échelle agrandie du détail F de la figure 4;
- la figure 6 est une vue éclatée en perspective d'un bol de travail et de la poignée selon un deuxième mode de réalisation de l'invention.

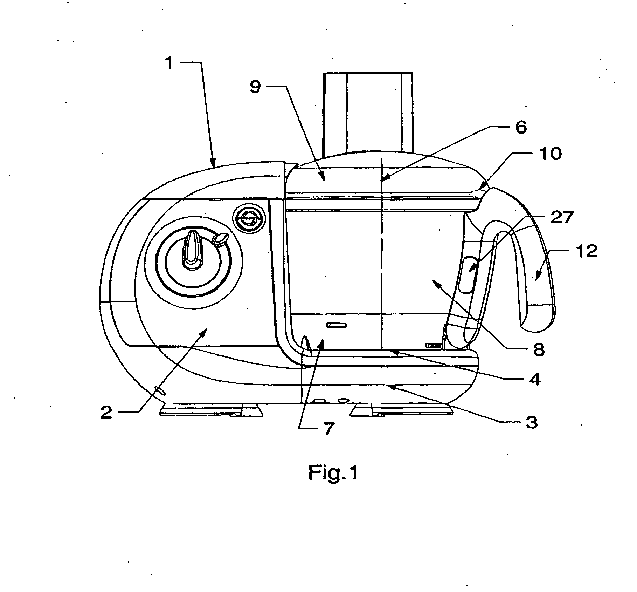

L'appareil électroménager pour le traitement des aliments représenté à la figure 1 est un robot de cuisine multifonction comportant un boîtier 1 ayant une forme générale de L dont la partie verticale est un montant 2 qui renferme un groupe moteur électrique (non représenté sur les figures) et la partie horizontale est un socle 3, par exemple de forme circulaire, dont la face supérieure 4 est traversée par l'arbre de Sortie vertical du groupe moteur d'axe vertical 6. Un bol 7 ou récipient de travail est destiné à être monté de manière amovible sur le socle 3 et comporte une poignée 12, Le bol 7 est fermé par un couvercle 9 amovible pourvu d'une trémie d'alimentation par laquelle sont introduits les aliments à préparer. Le bol présente une paroi de fond surmontée d'une cheminée dans laquelle vient s'engager l'arbre de sortie du groupe moteur et loge un outil de travail rotatif, tel un couteau, qui est enfilé sur la cheminée formée dans la paroi de fond du bol et qui est accouplé en rotation avec l'arbre de sortie du groupe moteur.

Le bol 7 est posé sur le socle 3 (ou, dans une variante, il peut être verrouillé sur le socle au moyen d'une fixation spécifique, par exemple à baïonnettes, à ergots de fixation, etc.) et le couvercle 9 est posé à son tour sur le bol 7 (ou, dans une variante, il peut être verrouillé sur le bol), le couvercle 9 sur le bol 7 et le bol sur le socle 3 étant verrouillés par une tige de sécurité 10 d'un dispositif de sécurité qui permet, lorsqu'il reçoit le mouvement de la tige de sécurité 10, de débloquer une tige d'embrayage dans le socle 3 afin d'actionner par la suite l'interrupteur de mise en marche du groupe moteur pour faire ensuite tourner l'outil dans le bol (ou, dans une variante, la tige de sécurité peut actionner directement, ou via une pièce intermédiaire l'interrupteur de mise en marche du groupe moteur).

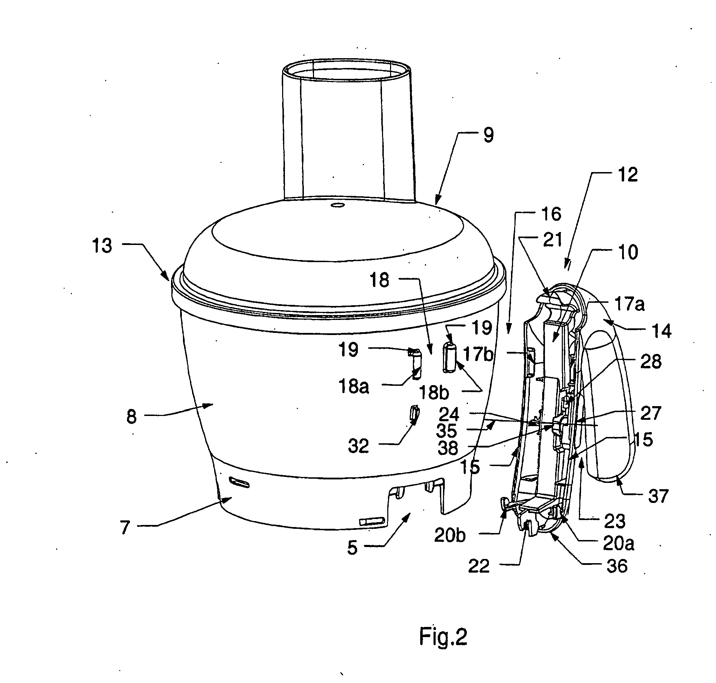

Plus particulièrement selon l'invention, la tige de sécurité 10 est supportée à l'intérieur de la poignée 12 montée de manière amovible sur la paroi latérale 8 du bol 7. Tel que mieux visible à la figure 2, ce montage amovible est rendu possible grâce à des moyens de fixation 16 dont les composants se trouvent en partie sur la paroi latérale 8 du bol 7 et en partie sur les bordures verticales 15 de la poignée 12. Des moyens de verrouillage 23 de la poignée 12 sont destinés à coopérer avec les moyens correspondants situés sur le bol 7 permettant d'assurer le maintien en position de la poignée 12 lors de sa mise en place sur le bol 7.

Le bol 7 présente une forme en tronc de cône renversé dont la partie inférieure est posée sur le socle 3 de l'appareil et la partie supérieure reçoit le rebord 13 du couvercle 9. Un tel bol peut être réalisé en une matière plastique transparente par une technique d'injection. La paroi latérale 8 du bol 7 comporte une glissière 18 saillante par rapport à la paroi latérale 8. La glissière 18 comporte deux rainures parallèles 18a et 18b agencées selon l'axe vertical 6 passant par le centre du bol 7. La glissière 18 comporte également une butée 19 disposée en l'extrémité supérieure de chacune des rainures 18a et 18b. Une patte de fixation 32, saillante par rapport à la paroi latérale 8 du bol 7, permet la mise en oeuvre des moyens de fixation 23, tel qu'il sera expliqué par la suite. Les rainures 18a, 18b de la glissière 18 et la patte de fixation 32 sont réalisées, de préférence, par injection en même temps que le bol ou elles peuvent être rapportées et fixées sur la paroi du bol.

La poignée 12 selon un premier mode de réalisation de l'invention et tel que visible à la figure 2 comporte un corps de poignée 14 en forme de V renversé dont une branche forme partie de fixation 36 à la paroi latérale 8 du bol 7 et l'autre branche comporte une extrémité libre 37 de section transversale arrondie qui sert de moyen de préhension du bol lorsque la poignée est montée sur le bol. La partie de fixation 36 présente une forme allongée de section transversale en demi-cercle dont les bordures verticales 15 comportent en leur partie supérieure une paire de tenons 17a, 17b verticaux parallèles orientés vers l'intérieur de la poignée. En partie inférieure des bordures verticales 15, est prévue une paire de brides 20a,20b en forme de coin, perpendiculaires aux bordures verticales 15, brides qui s'insèrent dans une fenêtre 5 du bol 7 constituant ainsi un moyen de fixation supplémentaire de la poignée 12 en partie inférieure de la paroi latérale 8 du bol 7.

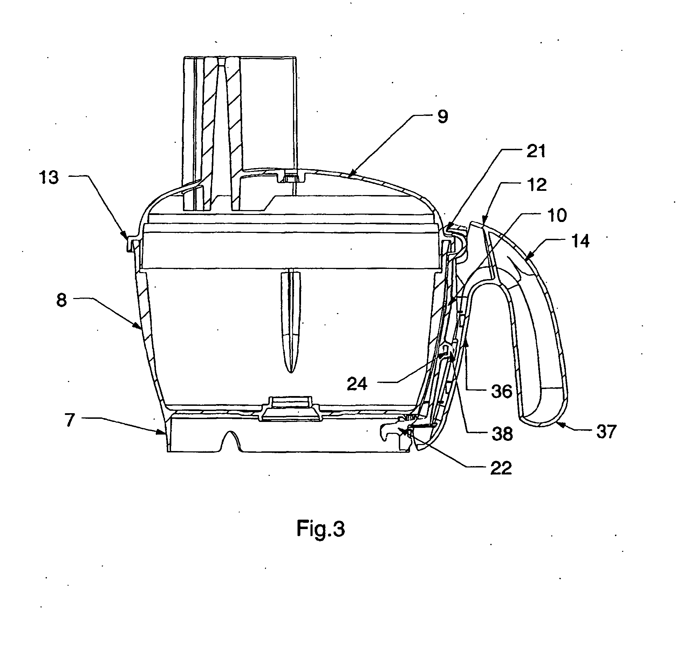

Une tige de sécurité 10 est contenue à l'intérieur de la partie de fixation 36 du corps de poignée 14, en retrait par rapport aux tenons 17a,17b. Cette tige est verticale ou légèrement inclinée selon la forme de la paroi 8 du bol 7. La tige de sécurité 10 comporte, en sa partie supérieure, un cran 21 venant en prise avec le rebord 13 du couvercle 9 lorsqu'un levier 22, disposé en l'extrémité opposée ou inférieure de la tige 10, vient en prise avec les autres composants du dispositif de sécurité permettant le mouvement de la tige de sécurité 10 pour verrouiller le couvercle 9 sur le bol 7, mouvement de la tige qui permet également l'actionnement de l'interrupteur du groupe moteur. Tel que mieux visible en figure 3, la tige de sécurité 10 comporte une articulation 38 avec laquelle elle est amenée à pivoter notamment autour d'un axe transversal 35, axe transversal qui est parallèle à la face supérieure 4 du socle 3.

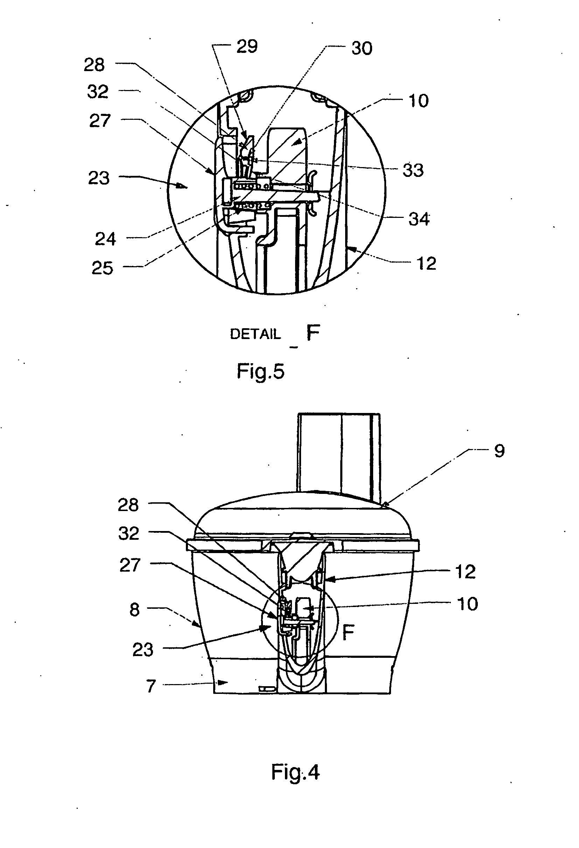

Comme mieux visible sur les figures 2 et 5, la poignée 12 contenant la tige de sécurité 10 comporte également une tige transversale 24 interne prolongée vers l'extérieur du corps de poignée 14 par un bouton poussoir 27 longitudinal réalisé en une pièce avec la tige transversale 24. La tige transversale 24 est montée à coulissement horizontal (ou transversal) à l'intérieur du corps de poignée 14, à l'encontre d'un ressort 25 de compression monté coaxial à la tige 24. Le ressort 25 est prévu pour pousser le bouton poussoir 27 vers l'extérieur du corps de poignée 14, à travers une fenêtre de forme correspondante au bouton poussoir 27 pratiquée dans le corps de poignée 14. Selon une disposition avantageuse de l'invention, la tige transversale 24 matérialise l'axe transversal 35 autour duquel pivote la tige de sécurité 10, cette dernière étant donc supportée à l'intérieur de la poignée 12 par la tige transversale 24.

La face interne du bouton poussoir 27 orientée vers la paroi 8 du bol 7 comporte un crochet 28 de section transversale en dent de scie destiné à coopérer avec la patte de fixation 32 de la paroi latérale 8 du bol 7. Ainsi, tel que mieux visible aux figures 4 et 5, le crochet 28 présente une surface inclinée 29 vers le bas se terminant par une partie horizontale 30. La surface inclinée 29 du crochet 28 vient en contact avec la face inclinée 34 de la patte 32 lors du coulissement vers le haut des tenons 17a, 17b dans les rainures 18a, 18b et pousse le ressort 25 vers l'intérieur du corps de poignée 14. En fin de course du crochet 28 par rapport à la patte 32, ce qui correspond à la fin de la course de coulissement des tenons 17a, 17b dans les rainures 18a,18b, le ressort regagne sa position d'équilibre, le bouton poussoir 27 repart vers l'extérieur et la partie horizontale 30 du crochet 28 vient en prise avec la surface horizontale 33 de la patte 32 formant ainsi butée inférieure de la poignée 12 en position sur la paroi latérale 8 du bol 7. Le crochet 28 du bouton poussoir 27 assure ainsi le maintien en position de la poignée 12 sur le bol 7, le déverrouillage étant effectué par une pression sur le bouton poussoir 27 et d'un mouvement simultané vers le bas de la poignée 12.

Avant le verrouillage du bol 7 sur le socle 3 et afin d'assurer la mise en marche de l'appareil, la poignée 12 contenant la tige de sécurité 10 doit être montée sur la paroi latérale 8 du bol 7. L'utilisateur fait alors glisser l'ensemble poignée (comportant le corps de poignée 14 et la tige de sécurité 10 maintenus ensemble par le bouton poussoir 27 et le ressort 25) sur la glissière 18 de la paroi latérale 8 du bol 7, par un mouvement vertical ascendant, jusqu'à ce que les tenons 17a, 17b du corps de poignée 15 arrivent en fin de course ou en contact avec la butée 19 des rainures 18a, 18b. La butée inférieure est assurée par le crochet 28 qui vient se fixer sur la patte 32 de la paroi du bol comme précédemment décrit. Le bouton poussoir 27 est maintenu en pression par le ressort 25 assurant ainsi le verrouillage en position de la poignée 12 sur la paroi 8 du bol 7. Ce montage laissant libre de mouvement la tige de sécurité 10, elle peut alors pivoter pour verrouiller mécaniquement le couvercle 9 et le bol 7. Le mouvement de pivotement de la tige de sécurité 10 est transmis par son levier 22 au dispositif de sécurité autorisant ainsi la mise en fonctionnement de l'appareil. Le démontage de l'ensemble poignée s'effectue par une pression sur le bouton poussoir, ce qui autorise ainsi le glissement de la poignée dans les rainures du bol, poignée qui est alors retirée par un mouvement descendant, dans le sens inverse du montage.

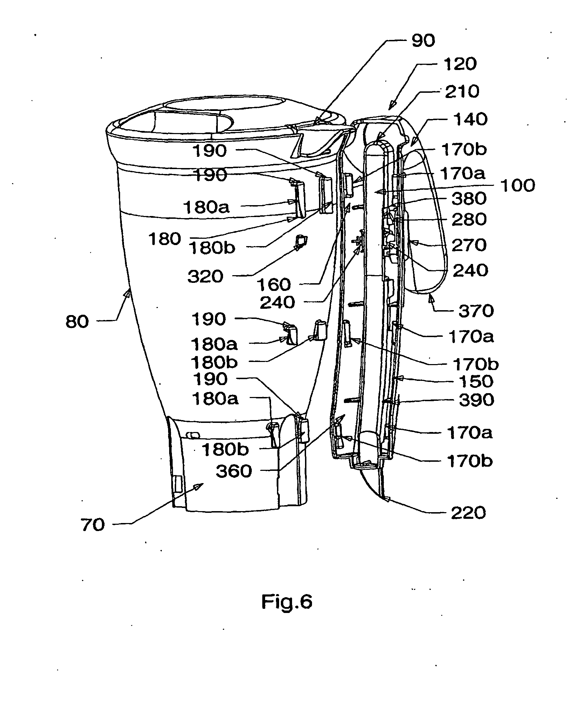

Dans une variante représentée à la figure 6, la poignée 120 est montée amovible sur la paroi latérale 80 du bol 70 d'un appareil du type blender (ou d'un mixeur - mélangeur). Un tel bol 70 peut également être monté sur le socle 3 de l'appareil afin de recevoir l'entraînement par le bas de l'arbre de sortie du groupe moteur pour son outil rotatif tournant autour d'un axe vertical, tel l'axe 6, ou alors il peut recevoir cet entraînement de l'arbre de sortie de l'axe moteur à un autre emplacement du boîtier 1, notamment en partie supérieure du montant 2.

Le bol 70 est fermé par un couvercle amovible 90. Le bol 70 est verrouillé sur un socle de l'appareil au moyen d'une fixation spécifique, par exemple à baïonnettes, à ergots de fixation, etc., et le couvercle 90 est verrouillé à son tour sur le bol 70, la présence simultanée du bol 70 sur son socle et du couvercle 90 sur le bol 70 étant détectée par une tige de sécurité 100 d'un dispositif de sécurité qui permet, lorsqu'il reçoit le mouvement de la tige de sécurité 100, d'actionner l'interrupteur de mise en marche du groupe moteur pour faire ensuite tourner l'outil dans le bol.

Plus particulièrement selon l'invention, la tige de sécurité 100 est supportée à l'intérieur d'une poignée 120 montée de manière amovible sur la paroi latérale 80 du bol 70. Tel que mieux visible à la figure 6, ce montage amovible est rendu possible grâce à des moyens de fixation 160 dont les composants se trouvent en partie sur la paroi latérale 80 du bol 70 et en partie sur les bordures verticales 150 de la poignée 120. Des moyens de verrouillage de la poignée 120 sont destinés à coopérer avec les moyens correspondants situés sur le bol 70 permettant d'assurer le maintien en position de la poignée 120 lors de sa mise en place sur le bol 70. Les moyens de verrouillage sont identiques aux moyens de verrouillage 23 précédemment décrits, un crochet 280 étant prévu dans ce but sur la partie interne d'un bouton poussoir 270 situé dans le prolongement d'une tige transversale 240 qui est, elle, montée à coulissement horizontal sous la poussée d'un ressort de compression. Le crochet 280 coopère, comme dans le premier mode de réalisation, avec une patte 320 située sur la paroi latérale 80 du bol 70.

Les particularités d'un tel bol 70 sont notamment sa forme allongée, supérieure à celle du bol 7 et son diamètre moyen réduit en comparaison avec celui du bol 7 d'un robot de cuisine multifonction. La poignée présente également une forme en V renversé avec une extrémité libre 370. De plus, la tige de sécurité 100 selon ce deuxième mode de réalisation effectue un mouvement axial de translation à l'intérieur de la poignée 120 à l'encontre d'un ressort de rappel qui, en position de repos, pousse vers le haut la tige de sécurité 100. De ce fait, selon ce deuxième mode de réalisation, il doit être assuré un meilleur guidage de la poignée amovible 120 sur la paroi latérale 80 du bol 70. Le corps de poignée 140 comporte dans ce but trois paires de tenons 170a, 170b repartis, de préférence uniformément, sur la partie interne des bordures verticales 150 du corps de poignée 140. Les trois paires de tenons 170a, 170b coopèrent avec trois portions de glissière 180, notamment avec trois paires de rainures correspondantes 180a, 180b munies chacune d'une butée 190 en leur partie supérieure.

La tige de sécurité 100 est contenue à l'intérieur de la partie de fixation 360 du corps de poignée 140, en retrait par rapport aux tenons 170a,170b. Cette tige est verticale ou légèrement inclinée selon la forme de la paroi 80 du bol 70. La tige de sécurité 100 comporte, en sa partie supérieure, une bosse 210 destinée à être poussée vers le bas par le rebord du couvercle 90 lors du verrouillage de ce dernier par rapport au bol. En sa partie inférieure, la tige de sécurité 100 comprend une extrémité 220 qui transmet le mouvement vertical de la tige en la présence du couvercle 90 aux autres composants du dispositif de sécurité dans le but d'actionner l'interrupteur du groupe moteur. Le guidage en mouvement axial de la tige de sécurité 100 est assuré, lors du coulissement de cette dernière par rapport à la tige transversale 240, en partie haute, par une fente 380 de guidage qui est prévue dans l'épaisseur de la tige de sécurité 100, fente 380 qui est traversée par la tige transversale 240 et, en partie basse, par une lumière prévue à l'extrémité de la partie de fixation 360 qui est traversée par l'extrémité 220 de la tige de sécurité 100. Des ailettes de guidage 390 peuvent également être prévues le long de la paroi interne du corps de poignée 140, ailettes bordant de part et d'autre la tige de sécurité 100 afin d'assurer un meilleur guidage de cette dernière lors de son coulissement vertical par rapport au corps de poignée 140.

Avant la mise en marche de l'appareil, l'utilisateur glisse par un mouvement vertical ascendant l'ensemble poignée dans les rainures 180a, 180b situées sur la paroi 80 du bol 70, à la fin du mouvement, l'ensemble poignée étant solidaire du bol 70. Le bouton poussoir 270 étant maintenu en pression par le ressort, assure le verrouillage en position de la poignée 120, la tige 100 étant libre de son mouvement par rapport au bol et à la poignée. Lorsque le couvercle 90 est verrouillé sur la partie supérieure du bol 70, la tige de sécurité 100 descend verticalement et autorise la mise en fonctionnement de l'appareil. Le démontage s'effectue par une pression sur le bouton poussoir 270, la poignée120 pouvant alors glisser dans les rainures 180a, 180b du bol 70 et être enlevée par un mouvement vertical descendant.

Les composants de l'ensemble poignée, notamment le corps de poignée, la tige de sécurité et le bouton poussoir sont réalisés en une matière plastique par une technique d'injection. Le fait de rendre l'ensemble poignée démontable par rapport au bol permet une réalisation selon des formes plus avantageuses et/ou dans plusieurs matériaux différents de ses composants. Ainsi, le corps de poignée peut être réalisé, par exemple, par bi-injection en faisant appel à deux matériaux différents : l'un de support (par exemple le polypropylène) assurant la robustesse et un autre plus doux destiné à offrir un toucher plus agréable sur ses parties de préhension (extrémité libre de la poignée, extrémité du bouton poussoir, etc.)

D'autres variantes et modes de réalisation de l'invention peuvent être envisagés sans sortir du cadre de ces revendications.

## Revendications

1. Appareil électroménager pour la préparation des aliments comportant un boîtier (1) renfermant un groupe moteur électrique et présentant une région formant socle (3) dont la face supérieure (4) est traversée par l'arbre de sortie du groupe moteur ; un bol (7,70) verrouillé de manière amovible sur le socle (3) du boîtier (1), ledit bol étant fermé par verrouillage par un couvercle (9,90) amovible et logeant un outil de travail destiné à être entraîné en rotation par l'arbre du groupe moteur ; un dispositif de sécurité comprenant un interrupteur agencé dans le circuit d'alimentation du moteur ; ainsi qu'une tige de sécurité (10,100) venant en prise avec ledit couvercle (9,90) et susceptible d'actionner ledit interrupteur du moteur lors du verrouillage du bol (7,70) avec le couvercle (9,90), le bol (7,70) présentant une poignée (12,120) de préhension, **caractérisé en ce que** la tige de sécurité (10,100) est supportée par ladite poignée (12,120) montée amovible sans utiliser d'outil de démontage sur la paroi latérale (8,80) du bol (7,70).

2. Appareil selon la revendication 1, **caractérisé en ce que** la poignée (12,120) présente un corps de poignée (14,140) muni, sur ses bordures verticales (15,150), de moyens de fixation (16,160) à la paroi latérale (8,80) du bol (7,70) et comportant, à l'intérieur du corps de poignée (14,140), des moyens de support pour la tige de sécurité (10,100).

3. Appareil selon la revendication 2, **caractérisé en ce que** lesdits moyens de fixation (16,160) comportent, sur la poignée (12,120), au moins une paire de tenons (17a,17b ; 170a,170b) d'engagement sur au moins une portion de glissière (18,180) située sur la paroi latérale (8,80) du bol (7,70) ou, inversement, les tenons (17a,17b ; 170a,170b) appartenant au bol (7,70) et la glissière (18,180) à la poignée (12,120).

4. Appareil selon la revendication 3, **caractérisé en ce que** ladite glissière (18,180) comporte une partie d'extrémité formant butée (19,190) pour les tenons (17a, 17b ; 170a,170b) de ladite poignée (12,120).

5. Appareil selon l'une des revendications 3 ou 4, **caractérisé en ce que**, lorsque lesdits tenons (17a,17b ; 170a,170b) sont situés sur la poignée (12,120), ils le sont sur la bordure interne du corps de poignée (14,140).

6. Appareil selon l'une des revendications précédentes, **caractérisé en ce qu'**il comporte des moyens de verrouillage (23) de la poignée (12,120) en position sur la paroi latérale (8,80) du bol (7,70).

7. Appareil selon la revendication 6, **caractérisé en ce que** lesdits moyens de verrouillage (23) comportent une tige transversale (24,240) montée à l'intérieur du corps de poignée (14,140) en étant munie d'un crochet (28,280) de fixation à la paroi latérale (8,80) du bol (7,70).

8. Appareil selon la revendication 7, **caractérisé en ce que** ladite tige transversale (24,240) est montée à coulissement horizontal à l'intérieur du corps de poignée (14,140) et qu'elle se prolonge par un bouton poussoir (27,270) extérieur.

9. Appareil selon la revendication 8, **caractérisé en ce que** ladite tige transversale (24,240) est montée à l'encontre d'un ressort (25) à l'intérieur du corps de poignée.

10. Appareil selon l'une des revendications 7 à 9, **caractérisé en ce que** ledit crochet (28,280) présente une section transversale en dent de scie où la surface inclinée (29) coopère avec la surface (33) correspondante d'une patte (32,320) située sur la paroi latérale (8,80) du bol (7,70) et la partie horizontale (30) sert de butée en fin de course.

11. Appareil selon l'une des revendications 7 à 10, **caractérisé en ce que** ladite tige transversale (24,240) forme support pour la tige de sécurité (10,100).

12. Appareil selon l'une des revendications précédentes, **caractérisé en ce que** ladite tige de sécurité (10) est montée pivotante autour d'un axe transversal (35) à l'intérieur de la poignée (12).

13. Appareil selon l'une des revendications 1 à 11, **caractérisé en ce que** ladite tige de sécurité (100) est montée à coulissement axial à l'intérieur de la poignée (120).

14. Appareil selon l'une des revendications 8 à 13, **caractérisé en ce que** ladite poignée (12,120) comporte un corps de poignée (14,140) en forme de V renversé, dont une branche sert de fixation à la paroi latérale du bol et porte ledit bouton poussoir (27,270) et l'autre branche forme extrémité de poignée, où ledit bouton poussoir (27,270) est agencé proche au-dessus de l'extrémité libre (37,370) de la poignée (12,120).

## Claims

1. A domestic electrical appliance for preparing food, the appliance comprising a housing (1) containing an electric motor unit and presenting a base-forming region (3) having a top face (4) with the outlet shaft of the motor unit passing therethrough; a bowl (7, 70) releasably locked on the base (3) of the housing (1), said bowl being closed by locking on a removable lid (9, 90), and housing a working tool designed to be rotated by the shaft of the motor unit; a safety device including a switch arranged in the power supply circuit of the motor; and a safety rod (10, 100) engaging with said lid (9, 90) and suitable for actuating said switch of the motor when the bowl (7, 70) and the lid (9, 90) are locked together, the bowl (7, 70) presenting a handle (12, 120), the appliance being **characterized in that** the safety rod (10, 100) is supported by said handle (12, 120) which is mounted on the side wall (8, 80) of the bowl (7, 70) to be removable without using a dismantling tool.

2. An appliance according to claim 1, **characterized in that** the handle (12, 120) presents a handle body (14, 140) provided on its vertical margins (15, 150) with fixing means (16, 160) for fixing to the side wall (8, 80) of the bowl (7, 70) and including, inside the handle body (14, 140), support means for the safety rod (10, 100).

3. An appliance according to claim 2, **characterized in that** said fixing means (16, 160) comprise, on the handle (12, 120), at least one pair of tenons (17a, 17b; 170a, 170b) for engaging with at least a portion of a slideway (18, 180) situated on the side wall (8, 80) of the bowl (7, 70), or conversely, the tenons (17a, 17b; 170a, 170b) belong to the bowl (7, 70) and the slideway (18, 180) belong to the handle (12, 120).

4. An appliance according to claim 3, **characterized in that** said slideway (18, 180) includes an end portion (19, 190) forming abutments for the tenons (17a, 17b; 170a, 170b) of said handle (12, 120).

5. An appliance according to claim 3 or claim 4, **characterized in that** when said tenons (17a, 17b; 170a, 170b) are situated on the handle (12, 120), they are on the inside margin of the handle body (14, 140).

6. An appliance according to any preceding claim, **characterized in that** it includes means (23) for locking the handle (12, 120) in position on the side wall (8, 80) of the bowl (7, 70).

7. An appliance according to claim 6, **characterized in that** said locking means (23) comprise a transverse rod (24, 240) mounted inside the handle body (14, 140) and provided with a hook (28, 280) for fixing to the side wall (8, 80) of the bowl (7, 70).

8. An appliance according to claim 7, **characterized in that** said transverse rod (24, 240) is mounted to slide horizontally inside the handle body (14, 140) and is extended by an external pushbutton (27, 270).

9. An appliance according to claim 8, **characterized in that** said transverse rod (24, 240) is mounted against a spring (25) inside the handle body.

10. An appliance according to any one of claims 7 to 9, **characterized in that** said hook (28, 280) presents a sawtooth cross-section where the inclined surface (29) co-operates with the corresponding surface (33) of a tab (32, 320) situated on the side wall (8, 80) of the bowl (7, 70) and the horizontal portion (30) serves as an end-of-stroke abutment.

11. An appliance according to any one of claims 7 to 10, **characterized in that** said transverse rod (24, 240) forms a support for the safety rod (10, 100).

12. An appliance according to any preceding claim, **characterized in that** said safety rod (10) is mounted to pivot about a transverse axis (35) inside the handle (12).

13. An appliance according to any one of claims 1 to 11, **characterized in that** said safety rod (100) is mounted to slide axially inside the handle (120).

14. An appliance according to any one of claims 8 to 13, **characterized in that** said handle (12, 120) comprises a handle body (14, 140) of upside-down V-shape, with one limb serving for fixing to the side wall of the bowl and carrying said pushbutton (27, 270), and with the other limb forming the free end of the handle, and in which said pushbutton (27, 270) is arranged close above the free end (37, 370) of the handle (12, 120).

## Patentansprüche

1. Elektrohaushaltsgerät für die Nahrungsmittelzubereitung, mit einem Gehäuse (1), das eine Elektromotorgruppe umschließt und einen Bereich aufweist, der einen Sockel (3) bildet, dessen obere Fläche (4) von der Abtriebswelle der Motorgruppe durchquert ist; einer Schale (7, 70), die abnehmbar am Sockel (3) des Gehäuses (1) verriegelt ist, wobei die Schale mittels eines abnehmbaren Deckels (9, 90) durch Verriegelung geschlossen ist und ein Arbeitswerkzeug aufnimmt, das von der Welle der Motorgruppe in Drehung versetzt werden soll; einer Sicherheitsvorrichtung, die einen Schalter aufweist, der im Kreis zur Stromspeisung des Motors angeordnet ist; sowie einer Sicherheitsstange (10, 100), die in den Deckel (9, 90) eingreift und bei der Verriegelung der Schale (7, 70) mit dem Deckel (9, 90) den Schalter des Motors betätigen kann, wobei die Schale (7, 70) einen Haltegriff (12, 120) aufweist, **dadurch gekennzeichnet, dass** die Sicherheitsstange (10, 100) von dem Griff (12, 120) getragen ist, der an der Seitenwand (8, 80) der Schale (7, 70) so angebracht ist, dass er ohne Verwendung eines Ausbauwerkzeugs abnehmbar ist.

2. Gerät nach Anspruch 1, **dadurch gekennzeichnet, dass** der Griff (12, 120) einen Griffkörper (14, 140), der an seinen vertikalen Rändern (15, 150) mit Mitteln (16, 160) zur Befestigung an der Seitenwand (8, 80) der Schale (7, 70) versehen ist, und im Griffkörper (14, 140) Mittel zum Tragen der Sicherheitsstange (10, 100) aufweist.

3. Gerät nach Anspruch 2, **dadurch gekennzeichnet, dass** die Befestigungsmittel (16, 160) am Griff (12, 120) mindestens zwei Zapfen (17a, 17b; 170a, 170b) für den Eingriff in mindestens einen Gleitflächenabschnitt (18, 180) aufweisen, welcher sich an der Seitenwand (8, 80) der Schale (7, 70) befindet, oder die Zapfen (17a, 17b; 170a, 170b) gehören umgekehrt zur Schale (7, 70) und die Gleitfläche (18, 180) zum Griff (12, 120).

4. Gerät nach Anspruch 3, **dadurch gekennzeichnet, dass** die Gleitfläche (18, 180) einen Endabschnitt aufweist, der einen Anschlag (19, 190) für die Zapfen (17a, 17b; 170a, 170b) des Griffs (12, 120) bildet.

5. Gerät nach Anspruch 3 oder 4, **dadurch gekennzeichnet, dass** die Zapfen (17a, 17b; 170a, 170b) am inneren Rand des Griffkörpers (14, 140) angeordnet sind, wenn sie sich am Griff (12, 120) befinden.

6. Gerät nach einem der vorhergehenden Ansprüche, **dadurch gekennzeichnet, dass** es Mittel (23) zur Verriegelung des Griffs (12, 120) aufweist, wenn dieser an der Seitenwand (8, 80) der Schale (7, 70) positioniert ist.

7. Gerät nach Anspruch 6, **dadurch gekennzeichnet, dass** die Verriegelungsmittel (23) eine Querstange (24, 240) aufweisen, die im Griffkörper (14, 140) angebracht ist, wobei sie mit einem Haken (28, 280) zur Befestigung an der Seitenwand (8, 80) der Schale (7, 70) versehen ist.

8. Gerät nach Anspruch 7, **dadurch gekennzeichnet, dass** die Querstange (24, 240) horizontal gleitend im Griffkörper (14, 140) angebracht und durch einen äußeren Druckknopf (27, 270) verlängert ist.

9. Gerät nach Anspruch 8, **dadurch gekennzeichnet, dass** die Querstange (24, 240) entgegen einer Feder (25) im Griffkörper angebracht ist.

10. Gerät nach einem der Ansprüche 7 bis 9, **dadurch gekennzeichnet, dass** der Haken (28, 280) einen sägezahnartigen Querschnitt aufweist, bei dem die geneigte Oberfläche (29) mit der entsprechenden Oberfläche (33) einer Lasche (32, 320) zusammenwirkt, die sich an der Seitenwand (8, 80) der Schale (7, 70) befindet, und der horizontale Abschnitt (30) als Endstellungsanschlag dient.

11. Gerät nach einem der Ansprüche 7 bis 10, **dadurch gekennzeichnet, dass** die Querstange (24, 240) einen Träger für die Sicherheitsstange (10, 100) bildet.

12. Gerät nach einem der vorhergehenden Ansprüche, **dadurch gekennzeichnet, dass** die Sicherheitsstange (10) im Griff (12) um eine Querachse (35) schwenkbar angebracht ist.

13. Gerät nach einem der Ansprüche 1 bis 11, **dadurch gekennzeichnet, dass** die Sicherheitsstange (100) axial gleitend im Griff (120) angebracht ist.

14. Gerät nach einem der Ansprüche 8 bis 13, **dadurch gekennzeichnet, dass** der Griff (12, 120) einen Griffkörper (14, 140) in Form eines umgekehrten V aufweist, bei dem ein Schenkel zur Befestigung an der Seitenwand der Schale dient und den Druckknopf (27, 270) trägt und der andere Schenkel ein Griffende bildet, wobei der Druckknopf (27, 270) nahe über dem freien Ende (37, 370) des Griffs (12, 120) angeordnet ist.
